(19) Europäisches Patentamt
European Patent Office
Office européen des brevets

(11) **EP 0 592 370 B1**

(12) **EUROPÄISCHE PATENTSCHRIFT**

(45) Veröffentlichungstag und Bekanntmachung des Hinweises auf die Patenterteilung:
**14.01.1998 Patentblatt 1998/03**

(51) Int. Cl.$^6$: **B01J 49/00**, C02F 1/42, B01J 47/04, B01J 47/00

(21) Anmeldenummer: 93810699.4

(22) Anmeldetag: **05.10.1993**

(54) **Verfahren zur Konditionierung von Ionenaustauschharzen**

Process for conditioning ion-exchange resins

Procédé pour conditionner des résines échangeuses d'ions

(84) Benannte Vertragsstaaten:
**AT BE CH DE FR GB LI NL SE**

(30) Priorität: **07.10.1992 CH 3132/92**

(43) Veröffentlichungstag der Anmeldung:
**13.04.1994 Patentblatt 1994/15**

(73) Patentinhaber: **Christ AG**
**CH-4147 Aesch (CH)**

(72) Erfinder: **Schmitt, Serge**
**F-68220 Hagenthal-le-Bas (FR)**

(74) Vertreter: **Braun, André et al**
**A. Braun Braun Héritier Eschmann AG**
**Holbeinstrasse 36-38**
**4051 Basel (CH)**

(56) Entgegenhaltungen:
**EP-A- 0 190 739      EP-A- 0 265 031**
**DE-A- 3 504 033      FR-A- 2 341 921**
**US-A- 4 430 226      US-A- 5 124 362**

• **Ullmans Encylopädie der technischen Chemie,**
**Band 13, 4. Auflage, Seiten 311 & 319.**

**Beschreibung**

Bei der Herstellung von Reinstwsser (Ultra Pure Water, UPW) sind Ionenaustauschharze unentbehrlich. Je reiner die Ionenaustauschharze sind, desto reineres UPW kann erzeugt werden. Die Reinheit der nach dem Stand der Technik hergestellten oder auch der nach einem Einsatz wieder nach dem Stand der Technik regenerierten Harze stösst an Grenzen, die für die derzeit erreichbare UPW-Qualität bestimmend sind.

In FR-A-2 341 921 ist ein Verfahren zur Reinigung von beim Betrieb von Kernreaktoren verwendeten, erschöpften Ionenaustauscherharzen, die mit radioaktiven Korrosionsprodukten und aus dem Kühlmittelkreislauf stammenden Stoffen beladen sind, beschrieben, bei dem in einem ersten Schritt die Harze mit demineralisiertem Wasser gewaschen und ausgewaschene, suspendierte radioaktive Partikel auf einem im Wasserkreislauf angeordneten mechanischen Filter deponiert werden, in einem zweiten Schritt die Harze mit verdünnter Mineralsäure regeneriert und die abgetrennten radioaktiven Kationen und Anionen an ein spezielles, im Mineralsäurekreislauf angeordnetes Adsorbens gebunden werden und in einem dritten Schritt die aus dem Kühlmittelkreislauf stammenden Stoffe aus der Mineralsäure zurückgewonnen werden.

Aus der EP-B-0 265 031 der Aquafine Corporation, einer Herstellerin von UV-Photoreaktoren, ist es bekannt, aus einem Ionenaustauschharz durch Spülen mit Wasser organisches Material zu entfernen, das dann durch Bestrahlen des das organische Material enthaltenden Wassers in einer Oxidationskammer mit UV-Licht mit einer Wellenlänge von 185 nm unter Bildung von in erster Linie $CO_2$ oxidiert wird, worauf das Wasser wieder durch dasselbe Ionenaustauschharz geführt wird, um das Kohlendioxid daran zu adsorbieren. Auf diese Weise wird das Ionenaustauschharz durch wiederholtes Zirkulierenlassen des Wassers durch das Ionenaustauschharz und die Oxidationskammer für die weitere Verwendung konditioniert, das heisst, von organischem Material bis zu einem bestimmten Restgehalt gereinigt.

Dieses Verfahren hat die folgenden Mängel:

1. Es soll nur organisches Material entfernen, wobei davon ausgegangen wird, dass alle im Wasser enthaltenen organischen Stoffe durch UV-Bestrahlung zu $CO_2$ abgebaut werden, das dann in der beschriebenen Weise auf dem zu reinigenden Ionenaustauschharz gebunden wird.

Heute ist aber bekannt, dass keineswegs alle organischen Stoffe durch UV-Bestrahlung abgebaut werden. Der grösste Teil des organischen Materials wird entweder gar nicht verändert oder bloss in eine höher oxidierte Form übergeführt, die dann in der Regel auf dem Harz noch fester gebunden wird als die ursprüngliche Substanz. Wenn das Ionenaustauschharz zur Erzeugung von Reinstwasser (Ultra Pure Water Production, UPWP) verwendet wird, können die höher oxidierten organischen Stoffe jedoch wieder eluiert werden und in das UPW gelangen.

Selbst wenn alle organischen Materialien zu $CO_2$ abgebaut würden, soll dieses nicht auf dem zu reinigenden Ionenaustauschharz angesammelt werden. Noch weniger erwünscht ist die Ansammlung der höher oxidierten organischen Verbindungen auf den Ionenaustauschharzen.

2. Das aus dem Ionenaustauschharz extrahierte organische Material soll lediglich durch UV-Bestrahlung mit oder ohne Katalysator entfernt werden. Dieses Verfahren ist, wie oben dargelegt, nur beschränkt wirksam.

Die Entfernung organischer Stoffe, etwas ungenau als Abbau des TOC (Total Organic Carbon oder Total Oxidizable Carbon) bezeichnet, hat in den letzten Jahren grosse Bedeutung erlangt, und es sind viele Methoden für diesen Zweck bekannt, die der Inhaberin der EP-B-0 265 031 offenbar nicht geläufig waren.

3. Das Verfahren nach der EP-B-0 265 031 wird in der Praxis nur zum Konditionieren von gemischten Harzen (Mischbetten) angewandt. Hingegen bietet die getrennte Reinigung von Ionenaustauschharzen, die zur Erzeugung von Reinstwasser im Gemisch, das heisst, in Mischbetten verwendet werden, die folgenden entscheidenden Vorteile:

a) Die Extraktion organischer Stoffe wird häufig vom pH-Wert beeinflusst. Es ist darum von Vorteil, wenn die Extraktion der Harze getrennt bei unterschiedlichen pH-Werten innerhalb eines möglichst breiten Bereichs durchgeführt wird.
b) Die Spülung des Kationenaustauschharzes im schwach sauren Bereich und die Spülung des Anionenaustauschharzes im schwach basischen Bereich erlauben eine Verbesserung der Regeneration der Harze gegenüber den Möglichkeiten des Standes der Technik.

Die Erfindung deckt einen weiteren Anwendungsbereich als das Verfahren nach der EP-B-0 265 031 ab und beseitigt deren Mängel. Erfindungsgemäss sollen

1. nicht nur organische Stoffe, sondern auch anorganische Stoffe aus den Harzen eluiert und aus dem Reinigungskreislauf entfernt werden;
2. die aus den Harzen extrahierten organischen Stoffe nicht nur durch UV-Bestrahlung (mit UV-Licht mit einer Wellenlänge von 185 nm) mit oder ohne Katalysator entfernt werden, sondern es sollen alle bekannten geeigneten Methoden bzw. Mittel einzeln oder in jeder geeigneten Kombination mit oder ohne Katalysatoren eingesetzt werden, z.B. Ozon, Perverbindungen, UV-Licht ohne Beschränkung auf eine bestimmte Wellenlänge, ionisierende Strahlung und Adsorbentien;

3. nicht nur gemischte lonenaustauschharze, sondern vorzugsweise auch sortenrein getrennte Harze gereinigt werden, insbesondere bei einem von 7 verschiedenen pH-Wert.

Die Erfindung bezieht sich somit auf ein Verfahren zum Konditionieren von lonenaustauschharzen, das dadurch gekennzeichnet ist, dass man Wasser über ein Bett des zu reinigenden Harzes bzw. der zu reinigenden Harze rezirkuliert und die aus dem Harz bzw. den Harzen ausgespülten organischen und anorganischen Stoffe mittels Methoden zur Reinigung von Wasser kontinuierlich aus dem zirkulierenden Wasser entfernt.

Weiter ist dieses Harzkonditionierungsverfahren dadurch gekennzeichnet, dass

- es zur weiteren Reinigung fabrikneuer oder nach bekannten Verfahren gereinigter oder regenerierter lonenaustauschharze eingesetzt wird,
- aus den Harzen nur noch die kleinen - für die UPW-Herstellung jedoch entscheidenden - Restgehalte an Fremdstoffen, die nach der Anwendung bekannter Verfahren noch auf den Harzen verbleiben, entfernt werden,
- es sich bei dem über die zu konditionierenden Harze rezirkulierenden Wasser um Reinwasser handelt, dessen Gehalt an Neutralsalzen bei weniger als 50 ppb, vorzugsweise bei weniger als 10 ppb, liegt und dessen Gehalte an freien Säuren oder freien Basen unter 5000 ppb, vorzugsweise unter 500 ppb, liegen (die in bekannten Verfahren üblichen Konzentrationen liegen 10 000-bis 100 000-mal höher),
- die Konditionierung im Gegensatz zu bekannten Regenerations- und Reinigungsverfahren, die nur während Stunden appliziert werden, Wochen oder Monate dauert.

Vorzugsweise werden dem zu dem Harz bzw. zu den Harzen fliessenden Wasser Stoffe zudosiert, die die Extraktion von organischen und/oder anorganischen Stoffen fördern; z.B. kann man so vorgehen, dass man dem Wasser beim Konditionieren von Kationanaustauschharzen Säure bis zu einem pH-Wert direkt unterhalb des Neutralpunkts, z.B. im Bereich von pH 5 bis 6, zudosiert, um den Regenerationsgrad der Harze zu erhöhen, und dem Wasser beim Konditionieren von Anionenaustauschharzen Lauge bis zu einem pH-Wert direkt oberhalb des Neutralpunkts, z.B. im Bereich von pH 8 bis 9, zudosiert, um den Regenerationsgrad der Harze zu erhöhen.

Man kann dem Wasser ebenfalls oberflächenaktive Stoffe zusetzen, die die zu reinigenden Harze nicht beeinträchtigen, um die Extraktion von organischen oder anorganischen Stoffen zu verbessern.

Es ist auch von Vorteil, wenn man dem zu dem Harz bzw. zu den Harzen fliessenden Wasser während oder nach der Konditionierung Stoffe zudosiert, die die Oberflächenstruktur des Harzes bzw. der Harze derart verändern, dass seine bzw. ihre Wirkung bei der Herstellung von Reinstwasser verbessert wird, z.B. Oxidationsmittel, die die Aufnahmefähigkeit der Harze für ungelöste Stoffe erhöhen.

Man kann zum Entfernen der aus dem Harz bzw. den Harzen ausgespülten organischen und/oder anorganischen Stoffe Ozon, Perverbindungen, z.B. Wasserstoffperoxid, ionisierende Strahlen, Adsorbentien, z.B. Aktivkohle, und Kationen-und/oder Anionenaustauschharze, z.B. Mischbettfilter, entweder einzeln oder in Kombination und mit oder ohne Katalysator anwenden und gegebenenfalls eine UV-Bestrahlung anschliessen.

Das erfindungsgemässe Verfahren kann z.B. so ausgeführt werden, dass man

dem auf ein Filter (K) mit den zu reinigenden Kationenaustauschharzen zufliessenden Wasser so viele Protonen, vorzugsweise mittels Schwefelsäure, zudosiert, dass das Wasser einen pH-Wert unter dem Neutralpunkt, vorzugsweise im Bereich zwischen 6 und 5, aufweist;

dem auf ein Filter (A) mit den zu reinigenden Anionenaustauschharzen zufliessenden Wasser so viel Lauge, vorzugsweise Natronlauge, zudosiert, dass das Wasser einen pH-Wert über dem Neutralpunkt, vorzugsweise im Bereich zwischen 8 und 9, aufweist;

dem jeweils aus den Filtern (K) bzw. (A) austretenden Wasser getrennt oder nach seiner Vereinigung Ozon und Wasserstoffperoxid zudosiert bei OC;

das so behandelte Wasser über ein Aktivkohlefilter leitet;

das aus dem Aktivkohlefilter austretende Wasser gegebenenfalls mit UV-Licht bestrahlt; und

das so behandelte Wasser durch ein Mischbettfilter leitet.

Das erfindungsgemässe Verfahren kann in eine Anlage zur Erzeugung von Reinstwasser (Ultra Pure Water Production System, UPWPS) integriert werden, so dass die neuen oder nach dem Stand der Technik regenerierten und erfindungsgemäss konditionierten Harze ohne Umfüllen und Zwischenlagerung, höchstens nach einem Transport in fest installierten Leitungen, zur Wasserreinigung eingesetzt werden können. Man geht dabei zweckmässig so vor, dass man zwei Mischbetten parallel schaltet, von denen jeweils eines in Betrieb ist, während die Harze aus dem anderen getrennt konditioniert werden. Weil auch nach extrem langen Konditionierungsperioden von z.B. mehr als einem Monat noch Spuren von Fremdstoffen aus den Harzen eluiert werden, schaltet man z.B. alle 6 Monate vom einen auf das andere Mischbett um.

Die beiliegende Zeichnung zeigt schematisch eine Ausführungsform des erfindungsgemässen Verfahrens. Dabei bedeuten

K ein zu reinigendes Kationenaustauschharzbett in einem Harzfilter;

A ein zu reinigendes Anionenaustauschharzbett in einem Harzfilter;

AK ein Aktivkohlefilter;

MB ein Mischbett-Ionenaustauschfilter;

OC eine Stufe zum Abbau (zur Zersetzung) gelöster organischer Stoffe;

$H^+$ die Zudosierung von Säure;

$OH^-$ die Zudosierung von Lauge.

Nach diesem Schema kann man wie folgt verfahren:

Dem auf das Harzfilter K zufliessenden Wasser wird so viel Säure $H^+$, vorzugsweise Schwefelsäure, zudosiert, dass in diesem Wasser ein pH-Wert unter dem Neutralpunkt, vorzugsweise im Bereich zwischen 6 und 5, resultiert. Somit liegt die Wasserstoffionenkonzentration 10- bis 100-mal höher als beim Neutralpunkt, so dass sich die Wasserstoffionenkonzentration auf dem Harz, das heisst, der Regenerationsgrad des Harzes, gemäss der folgenden, allgemein gültigen Gleichgewichtsbeziehung neu einstellt:

$$RNa/RH = k \times [Na]/[H]$$

Dabei steht Na für alle Kationen, von denen aber der grösste Teil aus Natrium besteht. Somit bedeuten

RNa die Kationenkonzentration auf dem Harz

RH die Wasserstoffionenkonzentration auf dem Harz

[Na] die Kationenkonzentration im Wasser

[H] die Wasserstoffionenkonzentration im Wasser, die definitionsgemäss bei Abnahme des pH-Wertes um eine Einheit um den Faktor 10 zunimmt

k einen temperaturabhängigen, für jede Harzqualität bzw. -sorte spezifischen Koeffizienten

Damit die Kationenkonzentration [Na] beim späteren Einsatz des Harzes zum Entfernen von Kationen aus dem Wasser möglichst klein wird, muss durch die Konditionierung des Harzes der Quotient RNa/RH möglichst klein oder, damit gleichbedeutend, der Regenerationsgrad des Harzes, ausgedrückt als

$$RH/(RH + RNa)$$

möglichst gross werden. Um dieses Ziel zu erreichen, wird während der Konditionierung die Wasserstoffionenkonzentration [H] erhöht, in diesem Beispiel um den Faktor 10 (pH 6) bis 100 (pH 5).

In analoger Weise wird dem Wasser, das auf das Filter A mit dem zu reinigenden Anionenaustauschharz zufliesst, so viel Lauge $OH^-$ zudosiert, dass sich ein pH-Wert über dem Neutralpunkt, vorzugsweise zwischen 8 und 9, ergibt.

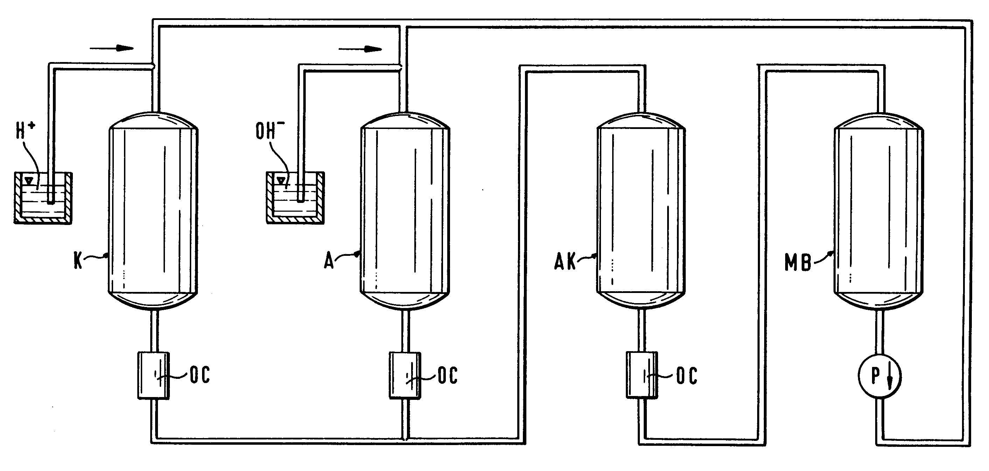

Den beiden Filtern K und A wird eine Stufe OC zum Abbau der extrahierten organischen Stoffe nachgeschaltet. In dem in Fig. 1 dargestellten Beispiel folgt jedem der Filter K und A eine Stufe OC; in der Praxis können aber die Eluate aus den Filtern K und A auch vereinigt und gemeinsam durch eine einzige Stufe OC geleitet werden. Diese kann z.B. aus dem Zudosieren von Ozon und Wasserstoffperoxid bestehen.

Auf dem der Stufe bzw. den Stufen OC nachgeschalteten Aktivkohlefilter AK werden überschüssiges Ozon und ein Teil der nicht zersetzten organischen Stoffe adsorbiert.

Auf das Aktivkohlefilter AK kann noch eine weitere Stufe OC zum Abbau von organischen Stoffen folgen, z.B. eine Bestrahlung mit UV-Licht.

Abschliessend durchläuft das Wasser ein Mischbettfilter MB, auf dem Säure- und Laugenreste, beim Abbau der organischen Stoffe entstandene Reaktionsprodukte und aus dem Aktivkohlefilter AK durch eine an sich unerwünschte, aber hier nicht störende Reaktion ausgewaschene anorganische Verunreinigungen gebunden werden. Dieses Mischbettfilter MB soll Ionenaustauschharze enthalten, die sich für diesen Zweck besonders gut eignen.

Am Ausgang des Mischbettfilters steht ein von organischen und anorganischen Stoffen reines und neutrales Wasser zur Verfügung.

**Patentansprüche**

1. Verfahren zum Konditionieren von Ionenaustauschharzen, dadurch gekennzeichnet, dass man Reinwasser mit einem Restsalzgehalt unter 50 ppb und einem Gehalt an freien Säuren oder freien Basen unter 5000 ppb über ein Bett des zu reinigenden Harzes bzw. der zu reinigenden Harze rezirkuliert und die aus dem Harz bzw. den Harzen ausgespülten organischen und anorganischen Stoffe mittels Methoden zur Reinigung von Wasser kontinuierlich aus dem zirkulierenden Wasser entfernt.

2. Verfahren nach Anspruch 1, dadurch gekennzeichnet, dass man dem zu dem Harz bzw. zu den Harzen fliessenden Wasser Stoffe zudosiert, die die Extraktion von organischen und/oder anorganischen Stoffen fördern.

3. Verfahren nach Anspruch 2, dadurch gekennzeichnet, dass man dem Wasser beim Konditionieren von Kationenaustauschharzen Säure bis zu einem pH-Wert direkt unterhalb des Neutralpunkts, z.B. im Bereich von pH 5 bis 6, zudosiert, um den Regenerationsgrad der Harze zu erhöhen.

4. Verfahren nach Anspruch 2, dadurch gekennzeichnet, dass man dem Wasser beim Konditionieren von Anionenaustauschharzen Lauge bis zu einem pH-Wert direkt oberhalb des Neutralpunkts, z.B. im Bereich von pH 8 bis 9, zudosiert, um den Regenerationsgrad der Harze zu erhöhen.

5. Verfahren nach einem der Ansprüche 2 bis 4, dadurch gekennzeichnet, dass man dem Wasser oberflächenaktive Stoffe zusetzt, die die zu reinigenden Harze nicht beeinträchtigen.

6. Verfahren nach einem der Ansprüche 1 bis 5, dadurch gekennzeichnet, dass man dem zu dem Harz bzw. zu den Harzen fliessenden Wasser während oder nach der Konditionierung Stoffe zudosiert, die die Oberflächenstruktur des Harzes bzw. der Harze derart verändern, dass seine bzw. ihre Wirkung bei der Herstellung von Reinstwasser verbessert wird, z.B. Oxidationsmittel.

7. Verfahren nach einem der Ansprüche 1 bis 6, dadurch gekennzeichnet, dass man zum Entfernen der aus dem Harz bzw. den Harzen ausgespülten organischen und/oder anorganischen Stoffe Ozon, Perverbindungen, z.B. Wasserstoffperoxid, ionisierende Strahlen, Adsorbentien, z.B. Aktivkohle, und Kationen- und/oder Anionenaustauschharze, z.B. Mischbettfilter, entweder einzeln oder in Kombination und mit oder ohne Katalysator anwendet und gegebenenfalls eine UV-Bestrahlung anschliesst.

8. Verfahren nach Anspruch 1, dadurch gekennzeichnet, dass man

dem auf ein Filter (K) mit den zu reinigenden Kationenaustauschharzen zufliessenden Wasser so viele Protonen (H$^+$), vorzugsweise mittels Schwefelsäure, zudosiert, dass das Wasser einen pH-Wert unter dem Neutralpunkt, vorzugsweise im Bereich zwischen 6 und 5, aufweist;
dem auf ein Filter (A) mit den zu reinigenden Anionenaustauschharzen zufliessenden Wasser so viel Lauge (OH$^-$), vorzugsweise Natronlauge, zudosiert, dass das Wasser einen pH-Wert über dem Neutralpunkt, vorzugsweise im Bereich zwischen 8 und 9, aufweist;
dem jeweils aus den Filtern (K) bzw. (A) austretenden Wasser getrennt oder nach seiner Vereinigung Ozon und Wasserstoffperoxid zudosiert (OC);
das so behandelte Wasser über ein Aktivkohlefilter (AK) leitet;
das aus dem Aktivkohlefilter (AK) austretende Wasser gegebenenfalls mit UV-Licht bestrahlt (OC); und
das so behandelte Wasser durch ein Mischbettfilter (MB) leitet.

9. Anwendung des Verfahrens nach einem der Ansprüche 1 bis 8 in einer Anlage zur Erzeugung von Reinstwasser.

## Claims

1. A process for the conditioning of ion exchange resins, wherein pure water having a residual salt content of less than 50 ppb and a content of free acids or free bases of less than 5,000 ppb is recirculated over a bed of the resin to be purified or of the resins to be purified, and the organic and inorganic substances washed out of the resin or the resins are removed continuously from the circulating water by methods for the purification of water.

2. A process as claimed in claim 1, wherein substances which promote the extraction of organic and/or inorganic substances are metered into the water flowing to the resin or to the resins.

3. A process as claimed in claim 2, wherein, in the conditioning of cation exchange resins, acid is metered into the water to a pH directly below the neutral point, for example in the range from pH 5 to 6, in order to increase the degree of regeneration of the resins.

4. A process as claimed in claim 2, wherein, in the conditioning of anion exchange resins, alkali is metered into the water to a pH directly above the neutral point, for example in the range from pH 8 to 9, in order to increase the degree of regeneration of the resins.

5. A process as claimed in any of claims 2 to 4, wherein surfactants which do not adversely affect the resins to be purified are added to the water.

6. A process as claimed in any of claims 1 to 5, wherein substances which change the surface structure of the resin or of the resins in such a way that its or their action in the preparation of ultra pure water is improved, for example oxidizing agents, are metered, during or after the conditioning, into the water flowing to the resin or to the resins.

7. A process as claimed in any of claims 1 to 6, wherein, for the removal of the organic and/or inorganic substances washed out of the resin or the resins, ozone, per compounds, for example hydrogen peroxide, ionizing radiation, adsorbents, for example active carbon, and cation and/or anion exchange resins, for example mixed-bed filters, either individually or in combination and with or without a catalyst, are used, followed, if required, by irradiation with UV light.

8. A process as claimed in claim 1, wherein

protons (H$^+$), preferably from sulfuric acid, are metered into the water flowing to a filter (K) with the cation exchange resins to be purified, in an amount such that the water has a pH below the neutral point, preferably in the range between 6 and 5;

alkali (OH$^-$), preferably sodium hydroxide solution, is metered into the water flowing to a filter (A) with the anion exchange resins to be purified, in an amount such that the water has a pH above the neutral point, preferably in the range between 8 and 9;

ozone and hydrogen peroxide are metered (OC) into the water emerging from the filters (K) and (A) respectively, separately or after combination thereof;

the water treated in this manner is passed over an active carbon filter (AK);

the water emerging from the active carbon filter (AK) is, if required, irradiated with UV light (OC), and

the water treated in this manner is passed through a mixed-bed filter (MB).

9. The use of the process as claimed in any of claims 1 to 8 in an ultra pure water production system.

**Revendications**

1. Procédé de traitement de résines échangeuses d'ions, caractérisé en ce que l'on fait circuler de l'eau pure dont la teneur en sels résiduels se situe au-dessous de 50 ppb et la teneur en acides libres ou en bases libres se situe au-dessous de 5000 ppb, sur un lit de la résine ou des résines à purifier et qu'on élimine continuellement de l'eau en circulation les matières organiques ou minérales extraitu de la résine ou des résines par des méthodes de purification de l'eau.

2. Procédé selon la revendication 1, caractérisé en ce qu'on ajoute à l'eau qui passe sur la résine ou sur les résines des substances qui favorisent l'extraxion de matières organiques et/ou minérales.

3. Procédé selon la revendication 2, caractérisé en ce qu'on ajoute à l'eau destinée au traitement de résines échangeuses de cations de l'acide jusqu'à une valeur de pH qui se situe immédiatement au-dessous du point neutre, par exemple, dans la plage de pH de 5 à 6, afin d'accroître le degré de régénération des résines.

4. Procédé selon la revendication 2, caractérisé en ce qu'on ajoute à l'eau destinée au traitement de résines échangeuses d'anions une solution alcaline jusqu'à une valeur de pH située immédiatement au-dessus du point neutre, par exemple, dans la plage de pH de 8 à 9, afin d'accroître le degré de régénération des résines.

5. Procédé selon l'une quelconque des revendications 2 à 4, caractérisé en ce qu'on ajoute à l'eau des substances tensioactives qui n'altèrent pas les résines à purifier.

6. Procédé selon l'une quelconque des revendications 1 à 5, caractérisé en ce qu'on ajoute à l'eau qui passe sur la résine ou sur les résines, pendant ou après le traitement, des substances qui modifient la structure superficielle de la résine ou des résines de manière telle que l'effet de celles-ci s'en trouve amélioré lors de la préparation d'eau ultrapure, par exemple, des agents oxydants.

7. Procédé selon l'une quelconque des revendications 1 à 6, caractérisé en ce qu'on utilise, pour éliminer les matières organiques et/ou minérales extraites de la résine ou des résines, de l'ozone, des composés peroxides, par exemple, l'eau oxygénée, des rayonnements ionisants, des agents adsorbants, par exemple, le charbon actif, et des résines échangeuses de cations et/ou d'anions, par exemple, des filtres à lit mixte, soit séparément, soit en association et avec ou sans catalyseur, et qu'on poursuit, le cas échéant, par une irradiation aux rayons ultraviolets.

8. Procédé selon la revendication 1, caractérisé en ce que

l'on ajoute à l'eau qui passe sur un filtre (K) comportant les résines échangeuses de cations à purifier des protons (H$^+$), de préférence au moyen d'acide sulfurique, en quantité telle que l'eau présente une valeur de pH située au-dessous du point neutre, de préférence dans la plage de 6 à 5;

l'on ajoute à l'eau qui passe sur un filtre (A) comportant des résines échangeuses d'anions à purifier une solution alcaline (OH$^-$), de préférence une lessive de soude caustique, en quantité telle que l'eau présente une valeur de pH située au-dessus du point neutre, de préférence dans la plage de 8 à 9;

l'on ajoute de l'ozone et de l'eau oxygénée (OC) aux eaux qui s'écoulent, respectivement, des filtres (K) et (A) soit séparément, soit après leur réunion;

on fait passer l'eau ainsi traitée sur un filtre à charbon actif (AK);

l'on irradie aux rayons ultraviolets (OC), le cas échéant, l'eau qui s'écoule du filtre à charbon actif (AK); et

on fait passer l'eau ainsi traitée à travers un filtre à lit mixte (MB).

9. Application du procédé selon l'une quelconque des revendications 1 à 8, dans une installation de préparation d'eau ultrapure.